# EUROPÄISCHE PATENTSCHRIFT

(11) **EP 0 449 281 B1**
(45) Veröffentlichungstag und Bekanntmachung des Hinweises auf die Patenterteilung: **02.02.1994**
(21) Anmeldenummer: 91104933.6
(22) Anmeldetag: 28.03.1991
(51) Int. Cl.: B23P 19/00

(54) **Verfahren und Vorrichtung zur Montage von Einsatzteilen in oder an Aufnahmen**
Method and device for inserting parts in holes
Méthode et appareil pour le montage des parts dans des trous

(30) Priorität: 30.03.1990 DE 4010374
(43) Veröffentlichungstag der Anmeldung: 02.10.1991
(73) Patentinhaber: KUKA Schweissanlagen & Roboter GmbH, D-86165 Augsburg (DE)
(72) Erfinder: Zimmer,Dieter, W-8904 Friedberg (DE)
(74) Vertreter: Ernicke, Hans-Dieter, Dipl.-Ing.

(56) Entgegenhaltungen:
- EP-A- 0 262 703
- DE-A- 3 319 885
- PATENT ABSTRACTS OF JAPAN vol. 9, no. 242 (M-417)(1965) 28 September 1985,& JP-A-60 094238 (TOSHIBA) 27 Mai 1985,

## Beschreibung

Die Erfindung betrifft ein Verfahren und eine Vorrichtung mit den Merkmalen im Oberbegriff des Verfahrens- und Vorrichtungshauptanspruches.

In der Fahrzeugtechnik besteht ein großes Problem bei der verkantungsfreien Montage von Tassenstößeln in Motorblocköffnungen, insbesondere wenn enge Passungen vorgesehen sind. Es ist bislang üblich, diese Tassenstößel von Hand einzusetzen und zu montieren. Dies ist bei engen Passungen nicht einfach und bedarf manchmal mehrerer Versuche. Die Handmontage ist daher zeit- und kostenaufwendig.

Aus der DE-A 23 58 498 ist ferner ein Verfahren und eine Vorrichtung zur maschinellen Montage von Kolben in einem Zylinder bekannt. Der Zylinder wird hierbei durch eine elastische Montagevorrichtung neben der Zylinderöffnung auf den Motorblock aufgesetzt, anschließend gekippt und dann in Schräglage zur Zylinderöffnung geschleppt und dort eingeführt. Danach wird der Kolben aufrecht gestellt und soll sich dabei selbst zentrieren. Dieses Verfahren setzt ein genügend großes Passungsspiel voraus und läßt sich für enge Passungen nur bedingt einsetzen. Probleme kann es auch mit scharfen Rändern geben, da der Kolben in Schräglage über den Zylinderrand rutschen muß.
Für die Montage von gelochten Scheiben auf einem Zapfen ist es ferner aus der gleichen Druckschrift bekannt, die Scheiben mit einem Greifer zu fassen und den Greifer auf dem Zapfen zu positionieren und zu zentrieren. Der Greifer besitzt eine in das Scheibenloch greifende Stange, die auf den Zapfen aufgesetzt wird. Wenn die Stange mit dem Zapfen fluchtet, wird die Scheibe über diese Innenführung auf den Zapfen geschoben.

Aus der DE-A 25 56 098 welche den nächstliegenden Stand der Technik beschreibt ist eine ähnliche Technik zum Einsetzen eines Stiftes in eine Werkstückbohrung bekannt. Die richtige Position wird auch hier mit dem Stift selbst gesucht, der dazu verkantet wird. Dies erfordert einerseits eine Phase am Bohrungsrand und läßt sich andererseits nur mit langen schlanken Körpern, wie Stiften oder dgl. durchführen. Für kompaktere Körper, insbesondere Tassenstößel ist die Technik nicht geeignet. Außerdem ist eine hoher Bauaufwand erforderlich. Der Stand der Technik benötigt nämlich einen aufwendigen Fühler zwischen der mehrachsig beweglichen Positioniervorrichtung und dem Stift, der die aus der Schrägstellung entstehenden Reaktionskräfte mißt. Aus den Kraftwerten für die verschiedenen Achsen wird ein Steuersignal ermittelt, das für eine Gegenbewegung der Positioniervorrichtung und zur Lagekompensation und Geradstellung des Stiftes herangezogen wird.

Es ist Aufgabe der vorliegenden Erfindung, eine Möglichkeit zur sicheren, genauen und schnellen Montage von Einsatzteilen in oder auf Aufnahmen aufzuzeigen, wobei auch die Möglichkeit zu einer Automatisierung gegeben sein soll.

Die Erfindung löst diese Aufgabe mit den Merkmalen im Verfahrens- und Vorrichtungshauptanspruch.

Das erfindungsgemäße Verfahren und die zugehörige Vorrichtung eignen sich für unterschiedliche Einsatzzwecke. Die Aufnahme kann wahlweise als Öffnung, als Zapfen oder auf sonstige Weise gestaltet sein, wobei die Form des zu montierenden Einsatzteils ebenfalls beliebig wählbar ist. Besondere Vorteile ergeben sich für die Montage von Einsatzteilen in Aufnahmeöffnungen, insbesondere von Tassenstößeln in Motorblocköffnungen, wo besonders hohe Genauigkeiten erzielbar sind.

Die Erfindung hat den Vorteil, daß das Einsatzteil selbst und unmittelbar durch Anlage an der Zentriervorrichtung vorpositioniert und gegenüber der Aufnahme zentriert wird, was eine optimale Positioniergenauigkeit bewirkt. Eine Aufsummierung von Toleranzen und Fehlern, wie bei einer mittelbaren Zentrierung sind dadurch ausgeschlossen. Dies gilt besonders für die Montage von Einsatzteilen in Aufnahmeöffnungen.

Die Zentrierung erfolgt ferner mit Abstand über der Aufnahme. Hierdurch kann das Passungsspiel sehr gering sein, was beispielsweise bei der Montage von Tassenstößeln der Fall ist. Andererseits wird durch den fehlenden mechanischen Kontakt beim Zentrieren zwischen Einsatzteil und Aufnahme die Beschädigungsgefahr verringert.

Die Zentriervorrichtung kann unterschiedlich ausgebildet sein, beispielsweise als Zentriertrichter oder dgl.. Entsprechend kann auch die Relativbewegung zwischen dem zu montierenden Einsatzteil und der Zentriervorrichtung variieren.

In der bevorzugten Ausführungsform werden das Einsatzteil und die Zentriervorrichtung durch eine quer zur Aufnahme gerichteten Bewegungskomponente zur gegenseitigen Anlage gebracht. Dies ermöglicht zum einen eine einfache, schnelle und kontrollierbare Kinematik. In diesem Rahmen sind auch Schrägbewegungen mit einer Querkomponente möglich. Andererseits erfolgt die Anlage an einer Seitenfläche und einseitig. Dies erlaubt es, die Zentriervorrichtung ohne Behinderung für das arretierte Einsatzteil zu entfernen.

Vorzugsweise wird das Einsatzteil durch einen formschlüssig zentrierenden Anschlag exakt über der Aufnahme, insbesondere in Form einer Aufnahmeöffnung, positioniert und nach Sperren der Querbeweglichkeit durch eine einfache Vorschubbewegung in die Aufnahme eingesetzt. Der Anschlag kann dabei auch eine exakte Drehausrichtung eines nicht rotationsymetrischen Einsatzteiles gegenüber der Aufnahme bewirken. Dieses Verfahren und die zugehörige Vorrichtung bieten eine hohe Betriebssicherheit bei exakter und schneller Montage, was sich in einer erheblichen Wirtschaftlichkeitssteigerung gegenüber dem Handbetrieb ausdrückt. Mit einer Quer- und einer Vorschubbewegung, die getrennt voneinander ablaufen und leicht und exakt beherrschbar sind, läßt sich die Montage besonders schnell und einfach durchführen. Mehrmalige Versuche sind unnötig.

Die Montage kann wahlweise von Hand, halbautomatisch oder vollautomatisch erfolgen. Vorzugsweise werden bei der Automatisierung mehrachsige Manipulatoren bzw. Industrieroboter eingesetzt. Der Montagevorgang kann damit in einer automatisierten Fertigungsstraße eingesetzt und in den Fertigungstakt problemlos integriert werden.

Die Zentriervorrichtung bzw. deren Zentrierstück sind exakt gegenüber der Aufnahme justiert, damit in der Anlagestellung des Einsatzteiles eine exakte Positionierung über der Aufnahme erfolgt. Das Zentrierstück kann auf besonders einfache und exakte Weise Justiert werden, indem es in oder an die Aufnahme greift und mit einem zweiten Anschlag sich dort selbsttätig formschlüssig zentriert. Die beiden Anschläge am Zentrierstück sind zueinander exakt ausgerichtet, so daß mit dem Eingriff des Zentrierstückes in oder an der Aufnahme auch der Anschlag für das Einsatzteil genau ausgerichtet ist.

Nach Arretierung des Einsatzteiles in der Anlagestellung wird das Zentrierstück entfernt, so daß mit dem anschließenden Vorschub das Einsatzteil in oder an die Aufnahme gesetzt werden kann. Die Selbstzentrierung des Zentrierstückes in oder an der Aufnahme hat den großen Vorteil, daß dies sehr schnell, genau und mit unmittelbarem Bezug zum letztendlich ausschlaggebenden Montageort geschieht. Auf einfache Weise und ohne großen Justieraufwand lassen sich dadurch mit einer einzelnen Zentriervorrichtung die Einsatzteile, insbesondere Tassenstößel, in eine Reihe von Aufnahmeöffnungen mit hoher Geschwindigkeit nacheinander einsetzen.

Die Kinematik, mit der das Einsatzteil in Anschlag mit der Zentriervorrichtung gebracht wird, läßt sich auf unterschiedliche Weise ausbilden. Einerseits kann das Einsatzteil gegen die feststehende Zentriervorrichtung durch einen Antrieb bewegt werden. Andererseits kann aber auch das Einsatzteil für sich allein grob über der Aufnahmeöffnung positioniert und dann durch eine Zustellbewegung der Zentriervorrichtung in Anschlag gebracht werden. Besonders vorteilhaft ist dies in Verbindung mit einem sich selbsttätig in der Aufnahmeöffnung justierenden Zentrierstück. Bei dessen Vorschubbewegung wird dann gleichzeitig das Einsatzteil eingefangen und in Anschlagstellung gebracht.

Die Unteransprüche geben vorteilhafte Ausgestaltungen der Erfindung wieder.

Die Erfindung ist in den Zeichnungen beispielsweise und schematisch dargestellt. Im einzelnen zeigen
- Figur 1:: Eine Seitenansicht auf eine Montagevorrichtung mit einem Montagekopf und einer Zentriervorrichtung,
- Figur 2:: eine Stirnansicht der Montagevorrichtung entsprechend Pfeil II von Figur 1 und
- Figur 3:: eine perspektivische Zuordnungsdarstellung von Einsatzteil, Zentrierstück und Aufnahmeöffnungen.

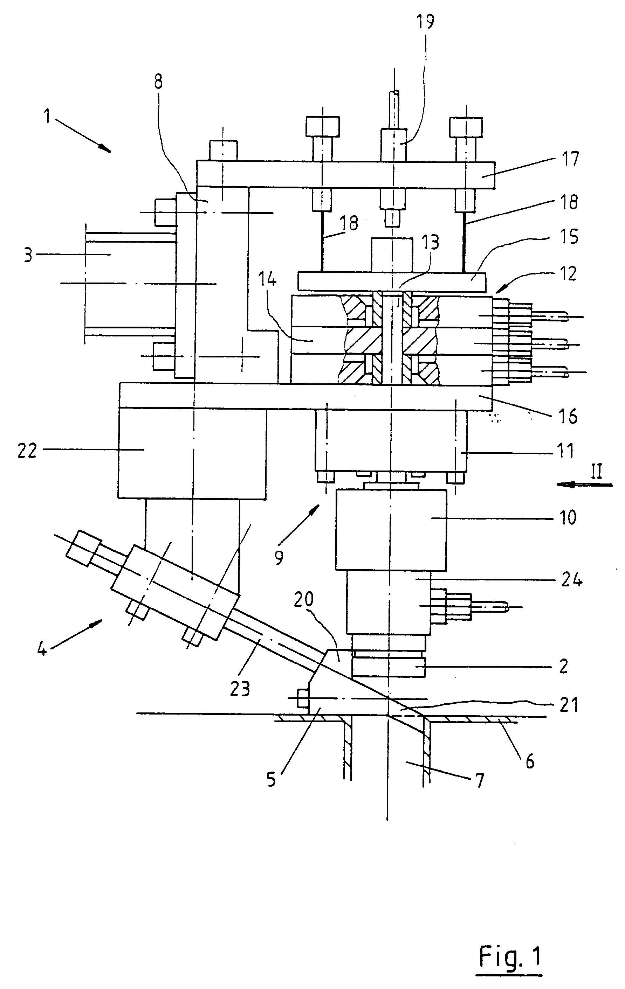

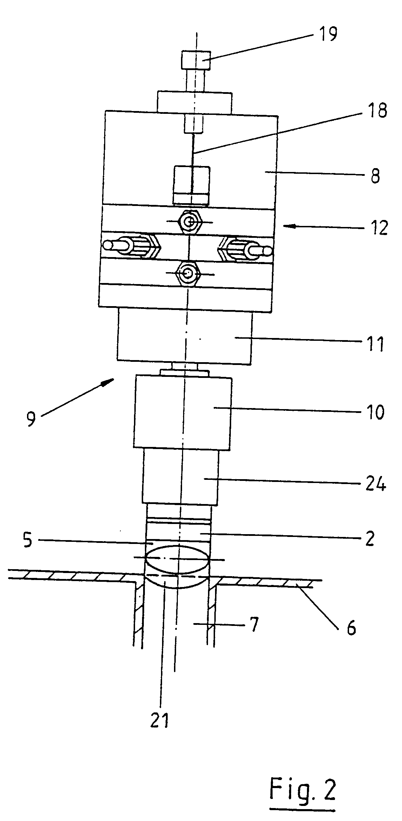

Die Figuren 1 und 2 zeigen die Montagevorrichtung (1) in Seiten- und Stirnansicht. Sie besteht aus einem Montagekopf (3) und einer Zustellvorrichtung (4). Der Montagekopf (3) wiederum beinhaltet eine Greifvorrichtung (9). Die Montagevorrichtung (1) dient zum paßgenauen Montieren von Einsatzteilen (2) in Aufnahmen, hier in Form von Aufnahmeöffnungen (7) an einem Aufnahmeteil (6). Im dargestellten Ausführungsbeispiel handelt es sich um Tassenstößel, die in zylindrische Bohrungen an einem Motorblock zu montieren sind.

Die Montagevorrichtung (1) ist an der Hand eines mehrachsigen Manipulators, vorzugsweise eines Industrieroboters, befestigt und wird von diesem gehandhabt. Der Übersichtlichkeit wegen ist der Industrieroboter nicht dargestellt. Stattdessen kann die Montagevorrichtung (1) aber auch mit eigenen Antrieben ausgerüstet und damit als völlig eigenständige Vorrichtung ausgebildet sein. Die Antriebsgestaltung variiert mit dem Einsatzzweck und -bereich.

Der Montagekopf (3) besteht im gezeigten Ausführungsbeispiel aus einem C-förmigen Gestell (8), in dem die Greifvorrichtung (9) über ein Lager (12) schwimmend gelagert ist. Die Greifvorrichtung (9) führt und hält den Tassenstößel (2), wobei dieser eine vorausgerichtete Lage parallel zur Aufnahmeöffnung (7) einnimmt. Der Montagekopf (3) ist mit der Greifvorrichtung (9) über der Aufnahmeöffnung (7) positioniert. Statt der gezeigten senkrechten Stellung kann die Aufnahmeöffnung (7) aber auch horizontal oder schräg bei entsprechender Umorientierung der Montagevorrichtung (1) angeordnet sein.

Die Greifvorrichtung (9) kann sich über das Lager (12) quer zur Längsachse der Aufnahmeöffnung (7) bewegen. Die gewünschte Stellung innerhalb des Montagekopfes (3) kann über eine Arretiervorrichtung (19) gesperrt werden. Im gezeigten Ausführungsbeispiel wird dann zum Einsetzen des Tassenstößels der Montagekopf (3) samt der arretierten Greifvorrichtung (9) abgesenkt.

Um den Tassenstößel (2) exakt gegenüber der Aufnahmeöffnung (7) auszurichten, ist eine Zentriervorrichtung (4) vorgesehen, die in der gezeigten Ausführungsform seitlich von der Greifvorrichtung (9) angeordnet und mit dem Montagekopf (3) verbunden ist. Alternativ ist auch eine getrennte Anordnung möglich. Die Justiervorrichtung (4) beinhaltet eine angetriebene Zustellvorrichtung (22) mit einem schräg abwärts gerichteten Schlitten (23), mittels dem ein Zentrierstück (5) schräg auf und ab bewegt werden kann. Das Zentrierstück (5) greift einerseits formschlüssig und sich selbst zentrierend in die Aufnahmeöffnung (7) ein und sorgt andererseits für die exakte horizontale Ausrichtung des zunächst mit Abstand über der Aufnahmeöffnung (7) positionierten Tassenstößels (2).

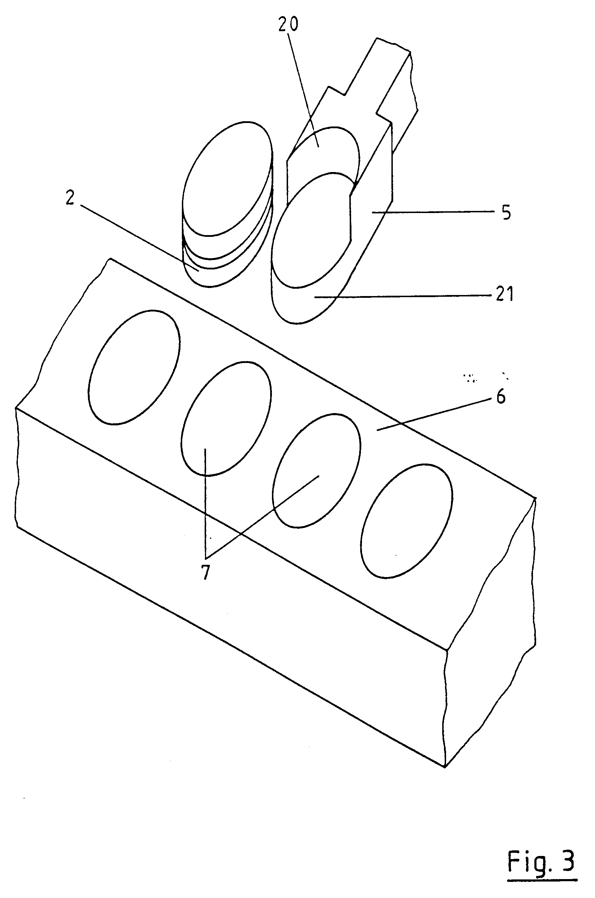

Wie insbesondere auch Figur 3 verdeutlicht, besitzt das Zentrierstück (5) am vorderen Ende einen schräg nach unten vorspringenden Anschlag (21), der eine der Aufnahmeöffnung (7) entsprechende Anlage-Kontur aufweist. Im gezeigten Ausführungsbeispiel sind der Tassenstößel (2) und die Aufnahmeöffnung (7) zylindrisch ausgebildet. Dementsprechend hat der Anschlag (21) die Form eines Zylindermantelabschnittes und schmiegt sich beim Eintauchen exakt an die Öffnungswand.

Oberhalb des konvexen Anschlages (21) befindet sich am Zentrierstück (5) ein konkaver Anschlag (20), der ebenfalls eine der Form der Aufnahmeöffnung (7) entsprechende Anlage-Kontur aufweist. Beide Anschläge (20,21) besitzen einen Umfangswinkel von maximal 180°. Der Anschlag (20) ist gegenüber dem Anschlag (21) nach hinten oder zur Seite versetzt und dabei so exakt justiert, daß er sich bei Einführung des Zentrierstückes (5) in die Aufnahmeöffnung (7) exakt über dieser befindet. Seine Anlage-Kontur fluchtet dann in der Längsachse mit der Öffnungswandung.

Der obere Anschlag (20) dient zum exakten Zentrieren des Tassenstößels (2) über der Aufnahmeöffnung (7). Hierzu werden das Zentrierstück (5) und der Tassenstößel (2) durch eine relative Querbewegung miteinander in Anlage gebracht. Die Anlage ist einseitig, wobei der Tassenstößel (2) mit seiner Seitenwand flächig am Anschlag (20) anliegt, von diesem formschlüssig umgriffen und über der Aufnahmeöffnung (7) zentriert wird.

Die Greifvorrichtung (9) erstreckt sich längs der Öffnungsachse und hält über einen Sauger (24) oder eine ähnliche Vorrichtung den Tassenstößel exakt parallel, kippfrei und mit Abstand gegenüber der Aufnahmeöffnung (7). Die vorerwähnte Querbewegung für die gegenseitige Anlage des Anschlages (20) und des Tassenstößels (2) ergibt sich innerhalb des Lagers (12), das ebenfalls quer zur Öffnungslängsachse ausgerichtet ist.

Der Antrieb für die besagte Querbewegung kann wahlweise über das Lager (12) oder über die Zustellvorrichtung (22) erfolgen. Im erstgenannten Fall ist das Lager (12) als Luftlager ausgebildet, das eine Lagerscheibe (14) umgibt. Die Greifvorrichtung (9) besitzt am oberen Ende einen Bolzen (13), der das Lager (12) durchsetzt und an dem die Lagerscheibe (14) befestigt ist. Oberhalb des Lagers (12) ist am Bolzen (13) eine weitere Platte (15) und gegebenenfalls ein Aufsatz befestigt.

Im gezeigten Ausführungsbeispiel ist das Lager (12) auf dem unteren Flansch (16) des C-förmigen Gestells (8) befestigt. Der mit Abstand oberhalb des Lagers (12) angeordnete zweite Flansch (17) trägt die eingangs erwähnte Arretiervorrichtung (19), hier in Form eines pneumatischen Druckzylinders. Bei dessen Betätigung wird die Kolbenstange gegen die Platte (15) oder den Bolzenaufsatz gedrückt und arretiert die Greifvorrichtung (9), die sich dann nicht mehr quer zum Montagekopf (3) bewegen kann.

Um die gegenseitige Anlagestellung des Anschlages (20) und des Tassenstößels (2) sicherzustellen, ist noch eine elastische Rückstellvorrichtung (18) vorgesehen. Diese besteht im gezeigten Ausführungsbeispiel aus zwei oder mehr Federdrähten, die vom Flansch (17) nach unten ragen und die Greifvorrichtung (9) mit der Platte (15) verbinden. Wenn die Greifvorrichtung (9) seitlich verschoben wird, werden die Federdrähte gespannt und üben damit den erwünschten Anlagedruck am Anschlag (20) aus.

Für die Stößelmontage wird die Montagevorrichtung (1) vom Industrieroboter grob gegenüber dem Motorblock (6) vorpositioniert. Die Greifvorrichtung (9) steht dabei in der Regel außermittig gegenüber der Aufnahmeöffnung (7). Anschließend wird über die Zustellvorrichtung (22) das Zentrierstück (5) mit seinem Anschlag (21) in die Aufnahmeöffnung (7) eingeführt und stützt sich dabei gleichzeitig auf der gegenüberliegenden Seite auf der Deckwand des Motorblocks ab. Die Zustellvorrichtung (22) besitzt dazu mindestens einen zusätzlichen Freiheitsgrad, beispielsweise ein Schwenklager, damit sich trotz Grobpositionierung das Zentrierstück (5) schräg von oben in die Aufnahmeöffnung (7) einführen läßt und sich dabei selbst über den Anschlag (21) zentriert.

Wenn die Greifvorrichtung (9) bewußt außermittig und dabei im Zustellweg des Zentrierstückes (5) angeordnet ist, kommt der Anschlag (20) beim Vorschub in Kontakt mit dem Tassenstößel (2) und schiebt diesen durch seinen bogenabschnittsförmigen Umgriff in die gewünschte Anlagestellung. Zugleich oder anschließend erfolgt im Rahmen der gleichen Zustellbewegung der Eingriff mit der Aufnahmeöffnung (7). In einer Zustellbewegung werden damit beide Anschlagstellungen gesucht und eingenommen.

Alternativ kann die Greifvorrichtung (9) auch nach der anderen Seite außermittig und damit außerhalb des Zustellweges des Zentrierstücks (5) vorpositioniert sein. Das Zentrierstück (5) wird dann in Eingriff mit der Aufnahmeöffnung (7) gebracht und in dieser Stellung festgehalten. Anschließend wird das Luftlager (12) aktiviert, das einen pneumatischen Antrieb zur Bewegung der innenliegenden Lagerscheibe (14) aufweist und den Tassenstößel (2) in Anlagestellung mit dem Anschlag (20) bringt.

In beiden Fällen wird nach Erreichen der Anlagestellungen die Greifvorrichtung (9) innerhalb des Montagekopfes (3) arretiert und dann das Zentrierstück (5) aus der Aufnahmeöffnung (7) zurückgezogen. Der Höhenversatz der Anschläge (20,21) und die schräg abfallende Verbindungswand zwischen diesen verhindert beim Rückzug Kollisionen mit dem Tassenstößel (2). Die Aufnahmeöffnung (7) liegt dann frei, so daß der Tassenstößel (2) mit einer einfachen und geradlinigen Vorschubbewegung des Montagekopfes (3) paßgenau eingesetzt werden kann. Im gezeigten Ausführungsbeispiel läßt sich dabei eine Montage mit einer H7/f6-Passung erzielen.

Um das Einsetzen noch weiter zu erleichtern, weißt die Greifvorrichtung (9) einen Vibrator, beispielsweise einen Druckluft-Kugelvibrator, auf, der oberhalb des Saugers (24) angeordnet ist. Um unerwünschte Rückwirkungen auf das Lager (12) zu vermeiden, kann ein Dämpfer (11) oberhalb des Vibrators (10) angeordnet und am Flansch (16) befestigt sein.

Nach erfolgter Montage wird der Tassenstößel (2) vom Sauger (24) gelöst, die Montagevorrichtung (1) zurückgezogen und nach Aufnahme eines neuen Tassenstößels (2) grob gegenüber der nächsten Aufnahmeöffnung (7) vorpositioniert. Anschließend werden wieder die Anlagestellungen eingenommen und der Montagevorgang läuft in der vorbeschriebenen Weise ab.

Alternativen zum beschriebenen Ausführungsbeispiel ergeben sich in mehrerlei Hinsicht. Zum einen können die Konturen von Einsatzteil und Aufnahmeöffnung sowie dementsprechend die Anlage-Konturen der Anschläge (20,21) prismatisch, oval oder auf beliebige andere Weise gestaltet sein. Die Zentrierung und Justierung beinhaltet dann auch eine paßgenaue Einstellung der richtigen Drehlage solcher nicht rotationsymetrischer Einsatzteile. Zu diesem Zweck hat die Greifvorrichtung eine zusätzliche und für sich arretierbare Drehbeweglichkeit. Entsprechend sind auch die Anlage-Konturen der Anschläge (20,21) gestaltet, die bei Eingriff mit dem Einsatzteil (2) bzw. der Aufnahmeöffnung (7) automatisch auch die richtige Drehstellung herstellen. Die Anlage-Kontur kann dazu aus mehreren voneinander abgesetzten Einzelflächen bestehen.

Die Zentriervorrichtung (4) kann sich grundsätzlich auch auf andere Weise gegenüber dem Aufnahmeteil (6) justieren, beispielsweise durch Referenzanschläge oder dergleichen. Das Zentrierstück (5) muß in diesem Fall auch nicht in die Aufnahmeöffnung (7) eingreifen, sondern kann schwebend darüber gehalten sein. Es muß dann für den Vorschub des Montagekopfes (3) auch nicht unbedingt zurückgezogen werden, sondern kann am Ort verharren, wobei sich empfiehlt, eine gegenseitige Relativbeweglichkeit zwischen der Zentriervorrichtung (4) und dem Montagekopf (3) zu schaffen. In weiterer Abwandlung kann der Vorschub zum Einführen des Einsatzteiles in die Aufnahmeöffnung auch durch einen eigenständigen Vorschubantrieb in der Greifvorrichtung (9) realisiert sein, so daß der Montagekopf (3) in seiner Grobposition verharrt.

Ebenso kann die Arretiervorrichtung (19) eine andere Ausbildung haben und an einer anderen Stelle angeordnet sein, z.B. als Federbelastung der beiden Deckscheiben des Luftlagers, die dann erst durch eingeblasene Luft von der Lagerscheibe (14) gelöst werden.

Die Aufnahme kann ebenfalls in unterschiedlicher Weise variiert werden, beispielsweise als seitlich offener Ring. In weiterer Abwandlung kann sie aus einem Führungszapfen oder dgl. bestehen, auf den entsprechend gelochte Einsatzteile, z.B. Scheiben oder Hülsen, aufgesetzt werden. Auch in diesen Fällen erfolgt eine formschlüssige Zentrierung der Einsatzteile über ihre Seitenwand an einem gegenüber der Aufnahme justierten Zentrierstück. Das Zentrierstück besitzt im Falle einer zapfenförmigen Aufnahme anstelle des bogenförmigen Anschlags eine Anschlaggabel oder dgl., mit der der Aufnahmezapfen zur Eigenjustierung umgriffen wird.

### STÜCKLISTE

- 1: Montagevorrichtung
- 2: Werkstück, Einsatzteil, Tassenstößel
- 3: Montagekopf
- 4: Zentriervorrichtung
- 5: Zentrierstück
- 6: Aufnahmeteil, Motorblock
- 7: Aufnahme, Aufnahmeöffnung
- 8: Gestell
- 9: Greifvorrichtung
- 10: Vibrator
- 11: Dämpfer
- 12: Lager
- 13: Bolzen
- 14: Lagerscheibe
- 15: Platte
- 16: Flansch, unten
- 17: Flansch, oben
- 18: elastische Rückstellvorrichtung, Federdraht
- 19: Arretiervorrichtung
- 20: Anschlag, Anlage-Kontur, für Einsatzteil
- 21: Anschlag, Anlage-Kontur, für Aufnahmeöffnung
- 22: Zustellvorrichtung
- 23: Schlitten
- 24: Sauger

## Patentansprüche

1. Verfahren zur Montage von Einsatzteilen in oder an Aufnahmen, insbesondere zur Montage von Tassenstößeln in Motorblocköffnungen, dadurch **gekennzeichnet**, daß das Einsatzteil (2) über der Aufnahme (7) in formschlüssig zentrierende Anlage mit einer gegenüber der Aufnahme (7) justierten Zentriervorrichtung (4) gebracht, in dieser Stellung arretiert und dann in oder an die Aufnahme (7) gesetzt wird.

2. Verfahren nach Anspruch 1, dadurch **gekennzeichnet**, daß das Einsatzteil (2) und die Zentriervorrichtung (4) in einer Relativbewegung mit einer quer zur Aufnahme (7) gerichteten Bewegungskomponente zur Anlage gebracht werden.

3. Verfahren nach Anspruch 2, dadurch **gekennzeichnet**, daß das Einsatzteil (2) einseitig und mit einer Seitenfläche an der Zentriervorrichtung (4) zur Anlage gebracht wird.

4. Verfahren nach Anspruch 1, 2 oder 3, dadurch **gekennzeichnet**, daß das arretierte Einsatzteil (2) mit einer geradlinigen Bewegung in oder an die Aufnahme (7) gesetzt wird.

5. Verfahren nach Anspruch 1 oder einem der folgenden, dadurch **gekennzeichnet**, daß das Einsatzteil (2) gegenüber der Zentriervorrichtung (4) bewegt wird.

6. Verfahren nach Anspruch 1 oder einem der folgenden, dadurch **gekennzeichnet**, daß das Einsatzteil (2) und die Zentriervorrichtung (4) in der Anlagestellung unter elastischem Druck zusammengehalten werden.

7. Verfahren nach Anspruch 1 oder einem der folgenden, dadurch **gekennzeichnet**, daß die Zentriervorrichtung (4) ihrerseits in formschlüssig zentrierende Anlage in oder an die Aufnahme (7) gebracht und nach Arretierung des Einsatzteils (2) entfernt wird.

8. Verfahren nach Anspruch 1 oder einem der folgenden, dadurch **gekennzeichnet**, daß das Einsatzteil (2) bei der Einsetzbewegung in Vibration versetzt wird.

9. Vorrichtung zur Montage von Einsatzteilen in oder an Aufnahmen, insbesondere zur Montage von Tassenstößeln in Motorblocköffnungen, dadurch **gekennzeichnet**, daß das Einsatzteil (2) in der Montagevorrichtung (1) gegenüber der Aufnahme (7) beweglich und arretierbar gehalten ist, und daß eine Zentriervorrichtung (3) mit einem gegenüber der Aufnahme (7) justierten und formschlüssigen zentrierenden Anschlag (20) für das Einsatzteil (2) vorgesehen ist.

10. Vorrichtung nach Anspruch 9, dadurch **gekennzeichnet**, daß das Einsatzteil (2) in der Montagevorrichtung (1) quer zur Aufnahme (7) schwimmend gelagert (12) ist und durch die Arretiervorrichtung (19) feststellbar ist.

11. Vorrichtung nach Anspruch 10, dadurch **gekennzeichnet**, daß die Montagevorrichtung (1) eine längs der Aufnahme (7) gerichtete Bewegungsachse zum Einsetzen des arretierten Einsatzteils (2) aufweist.

12. Vorrichtung nach Anspruch 9, 10 oder 11, dadurch **gekennzeichnet**, daß die Zentriervorrichtung (4) ein bewegliches Zentrierstück (5) mit einem seitlichen Anschlag (20) aufweist, wobei der Anschlag (20) eine die Aufnahme (7) zumindest teilweise nachformende Anlage-Kontur besitzt.

13. Vorrichtung nach Anspruch 12, dadurch **gekennzeichnet**, daß das Zentrierstück (5) einen zweiten Anschlag (21) aufweist, mit dem es mit formschlüssiger Anlage in oder an der Aufnahme (7) geführt ist.

14. Vorrichtung nach Anspruch 13, dadurch **gekennzeichnet**, daß die beiden Anschläge (20,21) in der Höhe versetzt und einander gegenüberliegend angeordnet sind.

15. Vorrichtung nach Anspruch 13 oder 14, dadurch **gekennzeichnet**, daß die Zentriervorrichtung (4) eine Zustellvorrichtung (22) aufweist, mit der das Zentrierstück (5) in oder an die Aufnahme (7) zuführbar und entfernbar ist.

16. Vorrichtung nach Anspruch 15, dadurch **gekennzeichnet**, daß die Zustellvorrichtung (22) eine schräg zur Aufnahme (7) gerichtete Bewegungsachse aufweist.

17. Vorrichtung nach Anspruch 9 oder einem der folgenden, dadurch **gekennzeichnet**, daß die Montagevorrichtung (1) einen längs zur Aufnahme (7) beweglichen Montagekopf (3) und eine darin schwimmend (12) und arretierbar (19) gelagerte Greifvorrichtung (9) aufweist, die das Einsatzteil (2) hält.

18. Vorrichtung nach Anspruch 17, dadurch **gekennzeichnet**, daß die Greifvorrichtung (9) einen das Lager (12) durchsetzenden Bolzen (13) mit einer außenliegenden Platte (15) aufweist, an der die Arretiervorrichtung (19) angreift.

19. Vorrichtung nach Anspruch 17 oder 18, dadurch **gekennzeichnet**, daß die Greifvorrichtung (9) über eine elastische Rückstellvorrichtung (18) mit dem Montagekopf (3) verbunden ist.

20. Vorrichtung nach Anspruch 19, dadurch **gekennzeichnet**, daß die Greifvorrichtung (9) über Federdrähte mit dem Gestell (8) des Montagekopfs (3) verbunden ist.

21. Vorrichtung nach Anspruch 9 oder einem der folgenden, dadurch **gekennzeichnet**, daß die Greifvorrichtung (9) einen Vibrator (10) aufweist.

22. Vorrichtung nach Anspruch 21, dadurch **gekennzeichnet**, daß die Greifvorrichtung (9) einen Dämpfer (11) zwischen dem Vibrator (10) und dem Lager (12) aufweist.

23. Vorrichtung nach Anspruch 9 oder einem der folgenden, dadurch **gekennzeichnet**, daß der Montagekopf (3) an einem Manipulator angeordnet ist.

## Claims

1. Method of mounting insert parts in or on receivers, in particular for mounting cup-type tappets in engine block openings, characterized in that the insert part (2) is brought above the receiver (7) into positively centring abutment with a centring apparatus (4), which is adjusted with respect to the receiver (7), is locked in this position and is then placed in or on the receiver (7).

2. Method according to Claim 1, characterized in that the insert part (2) and the centring apparatus (4) are brought into abutment in a relative movement having a movement component directed transversely with respect to the receiver (7).

3. Method according to Claim 2, characterized in that the insert part (2) is brought into abutment against the centring apparatus (4) at one end and by means of a side face.

4. Method according to Claim 1, 2 or 3, characterized in that the locked insert part (2) is placed in or on the receiver (7) using a rectilinear movement.

5. Method according to Claim 1 or to one of the subsequent claims, characterized in that the insert part (2) is moved with respect to the centring apparatus (4).

6. Method according to Claim 1 or to one of the subsequent claims, characterized in that the insert part (2) and the centring apparatus (4) are held together in the abutment position under resilient pressure.

7. Method according to Claim 1 or to one of the subsequent claims, characterized in that the centring apparatus (4) is for its part brought into positively centring abutment in or on the receiver (7) and, after locking of the insert part (2), is moved away.

8. Method according to Claim 1 or to one of the subsequent claims, characterized in that the insert part (2) is made to vibrate during the insertion movement.

9. Apparatus for mounting insert parts in or on receivers, in particular for mounting cup-type tappets in engine block openings, characterized in that the insert part (2) is held in the mounting apparatus (1) movably and lockably with respect to the receiver (7), and in that a centring apparatus (3) is provided with a positively centring stop (20), which is adjusted with respect to the receiver (7), for the insert part (2).

10. Apparatus according to Claim 9, characterized in that the insert part (2) is mounted to float (12) in the mounting apparatus (1) transversely with respect to the receiver (7) and can be fixed by the locking apparatus (19).

11. Apparatus according to Claim 10, characterized in that the mounting apparatus (1) has a movement axis which is directed along the receiver (7) for insertion of the locked insert part (2).

12. Apparatus according to Claim 9, 10 or 11, characterized in that the centring apparatus (4) has a movable centring piece (5) with a lateral stop (20), the stop (20) possessing an abutment contour which at least partially imitates the receiver (7).

13. Apparatus according to Claim 12, characterized in that the centring piece (5) has a second stop (21) by means of which it is guided with positive abutment in or on the receiver (7).

14. Apparatus according to Claim 13, characterized in that the two stops (20, 21) are vertically offset and are arranged opposite one another.

15. Apparatus according to Claim 13 or 14, characterized in that the centring apparatus (4) has an advancing apparatus (22) by means of which the centring piece (5) can be fed into or onto the receiver (7) and moved away therefrom.

16. Apparatus according to Claim 15, characterized in that the advancing apparatus (22) has a movement axis which is directed obliquely with respect to the receiver (7).

17. Apparatus according to Claim 9 or to one of the subsequent claims, characterized in that the mounting apparatus (1) has a mounting head (3), which is movable longitudinally with respect to the receiver (7), and a gripping apparatus (9) which is mounted to float (12) and to be lockable (19) therein and which holds the insert part (2).

18. Apparatus according to Claim 17, characterized in that the gripping apparatus (9) has a pin (13) passing through the bearing (12) and having an outer plate (15) on which the locking apparatus (19) acts.

19. Apparatus according to Claim 17 or 18, characterized in that the gripping apparatus (9) is connected to the mounting head (3) by way of a resilient restoring apparatus (18).

20. Apparatus according to Claim 19, characterized in that the gripping apparatus (9) is connected to the frame (8) of the mounting head (3) by way of spring-loaded wires.

21. Apparatus according to Claim 9 or to one of the subsequent claims, characterized in that the gripping apparatus (9) has a vibrator (10).

22. Apparatus according to Claim 21, characterized in that the gripping apparatus (9) has a damping means (11) between the vibrator (10) and the bearing (12).

23. Apparatus according to Claim 9 or to one of the subsequent claims, characterized in that the mounting head (3) is arranged on a manipulator.

## Revendications

1. Procédé pour monter des inserts dans ou sur des dispositifs de réception, notamment pour le montage de poussoirs à coupelle dans des ouvertures de blocs-moteurs, caractérisé par le fait qu'on amène l'insert (2) au-dessus du dispositif de réception (7) de manière qu'il soit appliqué en position centrée selon une liaison par formes complémentaires, au moyen d'un dispositif de centrage (4) ajusté par rapport au dispositif de réception (7), on le bloque dans cette position, puis on le pose sur ou contre le dispositif de réception (7).

2. Procédé suivant la revendication 1, caractérisé par le fait que l'insert (2) et le dispositif de centrage (4) sont appliqués conformément à un déplacement relatif dont une composante est dirigée transversalement par rapport au dispositif de réception (7).

3. Procédé suivant la revendication 2, caractérisé par le fait que l'insert (2) est appliqué unilatéralement et par une surface latérale contre le dispositif de centrage (4).

4. Procédé suivant la revendication 1, 2 ou 3, caractérisé par le fait que l'insert bloqué (2) est posé dans ou contre le dispositif de réception (7), selon un déplacement rectiligne.

5. Procédé suivant la revendication 1 ou l'une des suivantes, caractérisé par le fait que l'insert (2) est déplacé par rapport au dispositif de centrage (4).

6. Procédé suivant la revendication 1 ou l'une des suivantes, caractérisé par le fait que l'insert (2) et le dispositif de centrage (4) sont retenus assemblés dans la position appliquée, sous l'action d'une pression élastique.

7. Procédé suivant la revendication 1 ou l'une des revendications suivantes, caractérisé par le fait que le dispositif de centrage (4) est appliqué pour sa part d'une manière centrée et selon une liaison par formes complémentaires dans ou contre le dispositif de réception (7) et est retiré après le blocage de l'insert (2).

8. Procédé suivant la revendication 1 ou l'une des suivantes, caractérisé par le fait que lors du mouvement d'insertion, l'insert (2) est mis en vibration.

9. Dispositif pour le montage d'inserts dans ou contre des dispositifs de réception, notamment pour le montage de poussoirs à coupelle dans des ouvertures de blocs-moteurs, caractérisé par le fait que l'insert (2) est maintenu dans le dispositif de montage (1) de manière à pouvoir se déplacer et à pouvoir être bloqué par rapport au dispositif de réception (7), et qu'il est prévu un dispositif de centrage (3) comportant une butée (20) qui est ajustée par rapport au dispositif de réception (7), et réalise un centrage selon une liaison par formes complémentaires, pour l'insert (2).

10. Dispositif suivant la revendication 9, caractérisé par le fait que dans le dispositif de montage (1) l'insert (2) est supporté (12) à l'état flottant transversalement par rapport au dispositif de réception (7) et peut être bloqué par le dispositif de blocage (19).

11. Dispositif suivant la revendication 10, caractérisé par le fait que le dispositif de montage (1) possède un axe de déplacement, qui est dirigé le long du dispositif de réception (7), pour l'insertion de l'insert bloqué (2).

12. Dispositif suivant la revendication 9, 10 ou 11, caractérisé par le fait que le dispositif de centrage (4) comporte une pièce de centrage mobile (5) possédant une butée latérale (20), la butée (20) possédant un contour d'application, reproduisant au moins partiellement le dispositif de réception (7).

13. Dispositif suivant la revendication 12, caractérisé par le fait que l'élément de centrage (5) possède une seconde butée (21), au moyen de laquelle il est guidé, en étant appliqué selon une liaison par formes complémentaires, dans ou contre le dispositif de réception (7).

14. Dispositif suivant la revendication 13, caractérisé par le fait que les deux butées (20,21) sont décalées en hauteur et sont disposées en vis-à-vis l'une de l'autre.

15. Dispositif suivant la revendication 13 ou 14, caractérisé par le fait que le dispositif de centrage (15) possède un dispositif d'avance (22), au moyen duquel l'élément de centrage (5) peut être amené dans ou contre le dispositif de réception (7) et en être éloigné.

16. Dispositif suivant la revendication 15, caractérisé par le fait que le dispositif d'avance (22) possède un axe de déplacement orienté obliquement par rapport au dispositif de réception (7).

17. Dispositif suivant la revendication 9 ou l'une des revendications suivantes, caractérisé par le fait que le dispositif de montage (1) possède une tête de montage (3) déplaçable le long du dispositif de réception (7), et un dispositif de préhension (9), qui est monté à l'état flottant (12) dans la tête de montage et de manière à pouvoir être bloqué (19) et qui maintient l'insert (2).

18. Dispositif suivant la revendication 17, caractérisé par le fait que le dispositif de préhension (9) possède un boulon (13), qui traverse le palier (12) et comporte une plaque extérieure (15), qui est attaquée par le dispositif de blocage (19).

19. Dispositif suivant la revendication 17 ou 18, caractérisé par le fait que le dispositif de préhension (9) est relié à la tête de montage (3) par l'intermédiaire d'un dispositif de rappel élastique (18).

20. Dispositif suivant la revendication 19, caractérisé par le fait que le dispositif de préhension (9) est relié par l'intermédiaire de ressorts en forme de fils au châssis (8) de la tête de montage (9).

21. Dispositif suivant la revendication 9 ou l'une des suivantes, caractérisé par le fait que le dispositif de préhension (9) possède un vibrateur (10).

22. Dispositif suivant la revendication 21, caractérisé par le fait que le dispositif de préhension (9) comporte un amortisseur (11) disposé entre le dispositif vibrateur (10) et le palier (12).

23. Dispositif suivant la revendication 9 ou l'une des suivantes, caractérisé par le fait que la tête de montage (3) est disposée sur un manipulateur.
